(19) Europäisches Patentamt / European Patent Office / Office européen des brevets

(11) **EP 3 564 866 A1**

(12) **EUROPEAN PATENT APPLICATION**
published in accordance with Art. 153(4) EPC

(43) Date of publication:
**06.11.2019 Bulletin 2019/45**

(51) Int Cl.:
***G06N 3/063*** (2006.01)

(21) Application number: **17886335.3**

(22) Date of filing: **25.12.2017**

(86) International application number:
**PCT/CN2017/118264**

(87) International publication number:
**WO 2018/121472 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.12.2016 CN 201611234438**

(71) Applicant: **Shanghai Cambricon Information Technology Co., Ltd**
**Beijing 100191 (CN)**

(72) Inventors:
• **CHEN, Yunji**
**Shanghai 201203 (CN)**
• **SONG, Xinkai**
**Shanghai 201203 (CN)**
• **LIU, Shaoli**
**Shanghai 201203 (CN)**
• **CHEN, Tianshi**
**Shanghai 201203 (CN)**

(74) Representative: **AWA Sweden AB**
**P.O. Box 5117**
**200 71 Malmö (SE)**

(54) **COMPUTATION METHOD**

(57) The present disclosure provides an operation method which uses an artificial neural network computing device to perform operations on a multi-layer artificial neural network.

Fig. 2

EP 3 564 866 A1

## Description

## TECHNICAL FIELD

The present disclosure relates to the technical field of data processing, and more particularly to an operation method.

## BACKGROUND

Artificial Neural Networks (ANNs), simply referred to as Neural Networks (NNs), is an algorithmic mathematical model that imitates the behavioral characteristics of animal neural network and applies distributed parallel information processing. Such network relies on the complexity of the system, and enables information processing by adjusting the interconnecting relationships among a large number of internal nodes. The algorithm used by the neural networks is vector multiplication, with a wide use of symbolic functions and various approximations thereof.

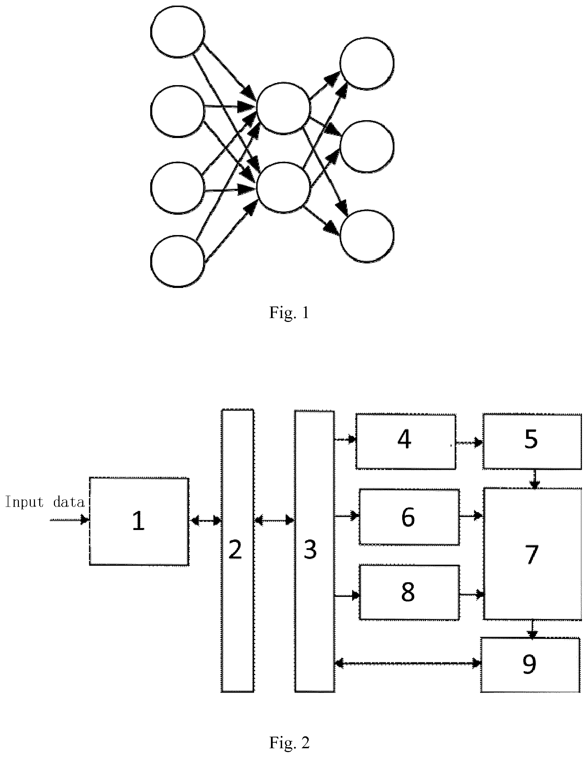

Like the neural network in the brain, the neural network consists of a number of interconnected nodes. As shown in Fig. 1, each circle represents a neuron, and each arrow represents the connection between two neurons, where the connection is also called the weight.

The calculation formula of a neuron can be simply described as: $y=f\left(\sum_{i=0}^{n} w_i * x_i\right)$, wherein $x_i$ represents all the input neurons connected to an output neuron, and $w_i$ represents the corresponding weight between the $x_i$ and the output neurons. $f(x)$ is a nonlinear function, usually called an activation function, like the commonly-used functions of $\frac{1}{1+e^{-x}}$, $\frac{e^x-e^{-x}}{e^x+e^{-x}}$, etc.

Neural network has been widely used in a variety of application scenarios: computational vision, speech recognition, natural language processing, etc. In recent years, the scale of neural network keeps growing. In 1998, the scale of Lecun's neural network for handwritten character recognition was less than 1M weights; while in 2012, the scale of krizhevsky's neural network used in the ImageNet competition was 60M weights.

## SUMMARY

According to an aspect of the present disclosure, there is provided an operation method for training a multi-layer artificial neural network with an artificial neural networks computing device. The artificial neural networks computing device comprises: a mapping unit, a storage unit, and an operation unit. The operation method includes: performing a forward operation sequentially on each layer of the multi-layer artificial neural network, wherein for each layer of the multi-layer artificial neural networks, the forward operation includes: processing input data by the mapping unit to obtain the processed input data, storing the processed input data by the storage unit, and reading the processed input data and performing an artificial neural network operation by the operation unit to obtain output data of the artificial neural network; performing an inverse operation sequentially on each layer of the multi-layer artificial neural network in an order reverse to the forward operation; updating the weights for each layer in the multi-layer artificial neural network; and repeating the above steps several times to complete the training of the multi-layer artificial neural network.

In some embodiments of the present disclosure, the artificial neural network computing device further includes: a first input buffer and a second input buffer. Updating the weights for each layer of the multi-layer artificial neural network includes: storing the weights and weight gradients for each layer of the artificial neural network respectively by the first input buffer and the second input buffer; and receiving the weight gradients from the second input buffer and then updating the weights with the weight gradients by the operation unit to obtain updated weights .

In some embodiments of the present disclosure, the input data includes input neurons and weights. Processing the input data by the mapping unit to obtain the processed input data includes: processing the weights by the mapping unit to obtain the processed weights and connecting relationship data of the weights; and processing the input neurons by the mapping unit based on connecting relationship data of the weights to obtain processed input neurons.

In some embodiments of the present disclosure, the input data includes input neurons and weights. Processing the input data by the mapping unit to obtain the processed input data includes: processing the input neurons by the mapping unit to obtain the processed input neurons and connecting relationship data of the input neurons; and processing the weights by the mapping unit based on connecting relationship data of the input neurons, to obtain processed weights.

In some embodiments of the present disclosure, processing the weights by the mapping unit includes: deleting, by the mapping unit, the unconnected weights and retaining the connected weights as the processed weights.

In some embodiments of the present disclosure, processing the weight by the mapping unit includes: deleting from the weights by the mapping unit the weights with values or absolute values less than or equal to a first threshold, to obtain the processed weights.

In some embodiments of the present disclosure, processing the input neurons by the mapping unit includes: deleting from the input neurons by the mapping unit the input neurons with values or absolute values less than or equal to a second threshold, to obtain the processed input neurons.

In some embodiments of the present disclo-

sure, the input data includes the processed weights, the input neurons, and the connecting relationship data of the input neurons. Processing the input data by the mapping unit to obtain the processed input data includes: processing the input neurons by the mapping unit according to the connecting relationship data of the input neurons to obtain the processed input neurons.

In some embodiments of the present disclosure, the input data includes the processed input neurons, the weights, and the connecting relationship data of the weights. Processing the input data by the mapping unit to obtain the processed input data includes: processing the weights by the mapping unit according to the connecting relationship data of the weight to obtain the processed weights.

In some embodiments of the present disclosure, processing the input data by the mapping unit to obtain the processed input data includes: processing at least one input neuron by the mapping unit to obtain the connecting relationship data of the input neuron; processing at least one weight by the mapping unit to obtain the connecting relationship data of the weight; obtaining a third connecting relationship data based on the connecting relationship data of the input neuron and the connecting relationship data of the weight and processing the input neuron and the weight according to the third connecting relationship data by the mapping unit, to obtain the processed input neurons and the processed weights.

In some embodiments of the present disclosure, the connecting relationship data of the input neuron and the connecting relationship data of the weight are expressed in the form of direct index or step index.

In some embodiments of the present disclosure, when the connecting relationship data of the input neuron is expressed in the form of direct index, the connecting relationship data is a character string composed of 0 and 1, with 0 indicating that the value of the input neuron is zero and 1 indicating that the value of the input neuron is non-zero; when the connecting relationship data of the input neuron is expressed in the form of step index, the connecting relationship data is a character string composed of distance values between input neurons of non-zero value and the input neurons of last non-zero value.

In some embodiments of the present disclosure, when the connection relation data of the weight is expressed in the form of direct index, the connecting relationship data is a character string composed of 0 and 1, with 0 indicating that the weight is a unconnected weight and 1 indicating that the weight is a connected weight; when the connecting relationship data of the weight is expressed in the form of step index, the connecting relationship data is a character string composed of distance values between input neurons connected to an output neuron and the previous input neurons connected to the output neuron.

In some embodiments of the present disclosure, for each layer of the multi-layer artificial neural network, the inverse operation includes: a weight gradient calculation step and an input neuron gradient calculation step, wherein the weight gradient calculation step includes: obtaining by the operation unit the weight gradient for each layer of the artificial neural network from the output neuron gradients and the input neurons of the layer; the input neuron gradient calculation step includes: storing the output neuron gradients and the processed weights in the storage unit by the mapping unit; and reading the output neuron gradients and the processed weights and performing an artificial neural network operation by the operation unit to obtain the input neuron gradients.

In some embodiments of the present disclosure, the output data of a preceding layer of the artificial neural network is used as the input data of a succeeding layer; or, an interlayer operation may be carried out on the output data of a preceding layer of the artificial neural network, and the operation result will be taken as the input data of a succeeding layer; wherein, for any two adjacent layers, a first layer and a second layer, of the artificial neural network: in the forward operation, the preceding layer refers to the first layer, and the succeeding layer refers to the second layer; and in the inverse operation, the preceding layer refers to the second layer, and the succeeding layer refers to the first layer.

The operation method of the present disclosure has the following beneficial effects: by storing input neurons and weights, output neurons and input neurons, as well as output neurons and weights in a one-to-one format, when performing the forward and inverse operations, the corresponding ones can be operated directly without finding the corresponding input and output neurons and weights through an index array, thereby reducing the number of accessing the memory, simplifying the operation, and improving the operation speed and performance. The connecting relationship data of a sparse artificial neural network can be updated, to improve the precision of sparse artificial neural network operation. With dedicated instruction and operation units for sparse multi-layer artificial neural network operations, the problem of insufficient operation performance of CPU and GPU and that of high expenditure on front-end decoding can be solved, improving the support on the algorithm of the multi-layer artificial neural network operations effectively.

## BRIEF DESCRIPTION OF THE DRAWINGS

The drawings are intended to facilitate further understanding of the present disclosure and constitute part of the specification, and, to explain the present disclosure together with the embodiments below, without limiting the present disclosure.

In the drawings:

Fig. 1 is a schematic diagram of an artificial neural network;

Fig. 2 is a structural diagram of an artificial neural network computing device according to an embodiment of the present disclosure;

Fig. 3 is a schematic diagram of the mapping relationship in the embodiment shown in Fig. 2;

Fig. 4 is a schematic diagram of an artificial neural network according to an embodiment of the present disclosure;

Fig. 5 is a schematic diagram of the connecting relationships of the artificial neural network shown in Fig. 4;

Fig. 6 is a structural diagram of an artificial neural network computing device according to another embodiment of the present disclosure;

Fig. 7 is a schematic diagram of the mapping relationship in the embodiment shown in Fig. 6;

Fig. 8 is a structural diagram of an artificial neural network computing device according to still another embodiment of the present disclosure;

Fig. 9 is a schematic diagram of the mapping relationship in the embodiment shown in Fig. 8;

Fig. 10 is a structural diagram of an artificial neural network computing device according to still another embodiment of the present disclosure;

Fig. 11 is a schematic diagram of the mapping relationship in the embodiment shown in Fig. 10;

Fig. 12 is a flowchart of the forward operation in an operation method according to an embodiment of the present disclosure;

Fig. 13 is a flowchart of the update of weight in an operation method according to an embodiment of the present disclosure;

Fig. 14 is a flowchart of the inverse operation in an operation method according to an embodiment of the present disclosure;

Fig. 15 is a flowchart of an operation method according to an embodiment of the present disclosure;

Fig. 16 is a flowchart of an operation method according to still another embodiment of the present disclosure;

Fig. 17 is a diagram showing the operational procedure on two adjacent layers in an operation method according to still another embodiment of the present disclosure.

## DESCRIPTION ON REFERENCE SIGNS

1. mapping unit;
2. storage unit;
3. DMA;
4. instruction buffer;
5. control unit;
6. first input buffer;
7. operation unit;
8. second input buffer;

9. output buffer.

## DETAILED DESCRIPTION

To the clarity of the objects, technical solutions and advantages of the present disclosure, further detailed descriptions on the present disclosure will be provided below with reference to the specific embodiments and drawings.

In an embodiment of the present disclosure, there is provided an artificial neural network computing device, comprising, as shown in Fig. 2a, a storage unit 2, a mapping unit 1, an operation unit 7, a DMA 3, an instruction buffer 4, a first input buffer 6, a second input buffer 8, an output buffer 9 and a control unit 5.

The mapping unit 1 is configured to process the input data after receiving it to obtain the processed input data, wherein the input data includes at least one input neuron and at least one weight, and the processed input data includes the processed input neurons and the processed weights.

Further, the mapping unit 1 takes each of the processed input neurons and its corresponding processed weight as an input neuron-weight pair; and all the input neuron-weight pairs constitute a dataset which is stored in the above storage unit 2.

Specifically, the mapping unit 1 deletes the unconnected weights, and retains the connected weights as the processed weights. The mapping unit 1 also obtains the connecting relationship data of the weights, and processes the input neurons according to the connecting relationship data of the weights to obtain the processed input neurons.

For example, a weight in the form of wij represents the weight between the i-th input neuron and the j-th output neuron. The mapping unit 1 determines from the weight the connecting relationship data thereof, and deletes the unconnected weights and retains the connected weights as the processed weights.

Or, specifically, the mapping unit 1 deletes the weights with values or absolute values less than or equal to the first threshold, to obtain the processed weights; the mapping unit 1 further obtains the connecting relationship data of the weights, and processes the input neurons according to the connecting relationship data of the weights, to obtain the processed input neurons.

For example, a weight in the form of wij represents the weight between the i-th input neuron and the j-th output neuron. The mapping unit 1 determines from the weight the connecting relationship data thereof, and deletes the weights with values or absolute values less than or equal to the first threshold, to obtain the processed weights.

The mapping unit 1 may further delete the input neurons with values or absolute values less than or equal to the second threshold to obtain the input neurons after zero-suppression, as the processed input neurons; the mapping unit 1 also obtains the connecting relationship data of the input neurons, and processes the weights according to the connecting relationship data of the input neurons to obtain the processed weights.

Optionally, the first threshold may be 0.1, 0.08, 0.05, 0.02, 0.01, 0 or any other value.

Optionally, the second threshold may be 0.1, 0.08, 0.06, 0.05, 0.02, 0.01, 0 or any other value.

It should be noted that the first threshold and the second threshold may be or may not be the same.

The connecting relationship data may be expressed in the form of step index or direct index.

Specifically, the connecting relationship data represented in the form of direct index is a character string composed of 0 and 1; for the connecting relationship data of a weight, 0 indicates that the value or the absolute value of the weight is less than or equal to the first threshold, that is, there is no connection between the input and output neurons corresponding to the weight; and 1 indicates that the value or the absolute value of the weight is greater than the first threshold, that is, there is a connection between the input and output neurons corresponding to the weight. There are two types of sequence for expression for the connecting relationship data expressed in the form of direct index: representing the connecting relationship of a weight with a character string of 0 and 1 formed by the connection states of each output neuron with all the input neurons; or representing the connecting relationship of a weight with a character string of 0 and 1 formed by the connection states of each input neuron with all the output neurons.

For the connecting relationship data of an input neuron, 0 indicates that the input neuron or the absolute value thereof is less than or equal to the second threshold, and 1 indicates that the input neuron or the absolute value thereof is greater than the second threshold.

For the connecting relationship data of a weight, the connecting relationship data in the form of step index is a character string composed of distance values between an input neuron connected to an output neuron and a preceding input neuron connected to the output neuron. For input neurons, the connecting relationship data in the form of step index is represented by a character string composed of distance values between a current non-zero input neuron and a preceding non-zero input neuron.

For example, assuming that the first threshold is 0.01 and the input neurons are i1, i2, i3 and i4, the weights for the output neuron o1 are $w_{11}$, $w_{21}$, $w_{31}$ and $w_{41}$; the weights for the output neuron o2 are $w_{12}$, $w_{22}$, $w_{32}$ and $w_{42}$, wherein the values of the weights $w_{21}$, $w_{12}$, and $w_{42}$ are 0 with their absolute values all less than the first threshold value 0.01, and the mapping unit 1 determines that the input neuron i2 and the output neuron o1 are not connected, the input neurons i1 and i4 are not connected to the output neuron o2, the input neurons i1, i3 and i4 are connected to the output neuron o1, and the input neurons i2 and i3 are connected to the output neuron o2. When the above connecting relationship data is represented by the connection states of each output neuron with all the input neurons, the connecting relationship data of the output neuron o1 is "1011", and the connecting relationship data of the output neuron o2 is "0110" (i.e., the connecting relationship data is "10110110"); when the above connecting relationship data is represented by the connection states of each input neuron with all the output neurons, the connecting relationship data of the input neuron i1 is "10", the connecting relationship data of the input neuron i2 is "01", the connecting relationship data of the input neuron i3 is "11", and the connecting relationship data of the input neuron i4 is "10" (i.e., the connecting relationship data is "10011110"). In this embodiment, the connecting relationship data can be represented by a high-dimensional dynamic array, a linked list or the like.

For the output neuron o1, the mapping unit 101 takes i1 and wn, i3 and $w_{31}$, and i4 and $w_{41}$ respectively as input neuron-weight pairs, and all the input neuron-weight pairs constitute a dataset which is stored in the storage unit 2. For the output neuron o2, the mapping unit 101 takes i2 and $w_{22}$, and i3 and $w_{32}$ respectively as an input neuron-weight pair, and all the input neuron-weight pairs constitute a dataset which is stored in the storage unit 2.

The input neuron-weight pair is not a true data storage structure, but merely represents the correspondence between the input neuron and the weight. For example, the input neurons are stored in a vector A, the weights are stored in a vector B, with the vectors A and B having the same length, then components of the same position in the vectors A and B are combined and considered as an input neuron-weight pair.

In another embodiment, the mapping unit 101 processes at least one input neuron to obtain the connecting relationship data of the input neuron, processes at least one weight to obtain the connecting relationship data of the weight, obtains the third connecting relationship data based on the connecting relationship data of the input neuron and that of the weight, and processes the input neuron and the weight according to the third connecting relationship data to obtain the processed input neuron and the processed weight.

The connecting relationship data of the input neuron is a character string indicating the positions of input neurons with non-zero values in the at least one input neuron; and the connecting relationship data of the weight is a character string indicating whether there is a connection between the input neuron and the output neuron.

It should be noted that the connecting relationship data of the input neuron and the connecting relationship data of the weight may both be expressed in the form of step index or direct index. For details, please refer to the related description in the previous embodiment.

Specifically, when the connecting relationship data of the input neuron and that of the weight are both in the form of direct index, the mapping unit 1 applies an AND operation to the connecting relationship data of the input neuron and that of the weight.

When the connecting relationship data of the input neuron and that of the weight are both in the form of step index, the mapping unit 1 accumulates each element in the character string of the connecting relationship data of the input neurons, from left to right, with the preceding elements, to constitute the connecting relationship data of the input neurons with the obtained new elements; similarly, the mapping unit 1 applies the same operation to the character string of the connecting relationship data of the weight. Then the mapping unit 1 selects identical elements from the character string of the connecting relationship data of the input neuron and that of the weight, to constitute a new character ring according to their sequence in the connecting relationship data of the input neuron or that of the weight. The mapping unit 1 deducts each element in the new character string by its immediate preceding element to obtain a new element. According to this method, each element in the new character string is subjected to the respective operations to obtain the third connecting relationship data.

For example, assuming that the connecting relationship data of the input neuron and that of the weight are in the form of step index, the character string of the connecting relationship data of the weight is "01111", and that of the input neuron is "022"; each element in the character string of the connecting relationship data of the weight is added with its immediate preceding element to obtain the fourth connecting relationship data "01234". Similarly, a fifth connecting relationship data "024" can be obtained by applying the same processing to the character string of the connecting relationship data of the input neuron. Identical elements are selected from the fourth connecting relationship data "01234" and the fifth connecting relationship data "024" to obtain a new character string "024". Each element in the new character string is deducted by its immediate preceding element, as 0, (2-0), (4-2), to obtain the third connecting relationship data "022".

The mapping unit 1 takes each of the processed input neurons and its corresponding processed weight as an input neuron-weight pair, and all the input neuron-weight pairs constitute a dataset which is stored in the storage unit 2.

It can be seen that, in the solutions of the embodiments of the present disclosure, the mapping unit processes the input neurons and the weights and removes the input neurons and the weights with a value of 0, reducing the number of the input neurons and the weights and any additional expenditure; the operation unit performs an artificial neural network operation based on the processed input neurons and weights, improving the operational efficiency.

In this embodiment, when the artificial neural network computing device is used for a forward operation, the mapping unit 1 reads the input neurons and weights stored in the storage unit 2 and has them processed, to obtain the connecting relationship data of the artificial neural network.

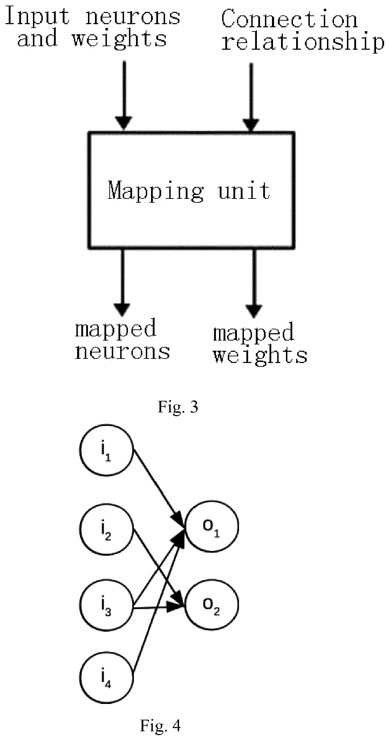

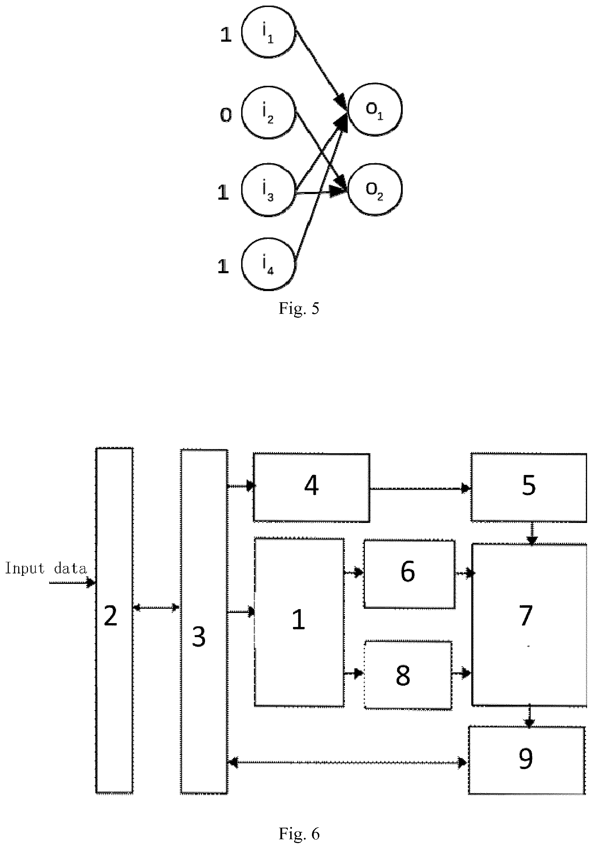

The connecting relationship data can be in the form of direct index as described above. For example, the artificial neural network shown in Fig. 4 comprises four input neurons i1, i2, i3, i4 and two output neurons o1, o2. In this artificial neural network, as shown in Fig. 5, o1 is connected with i1, i3 and i4, but not with i2, so the connection state of the output neuron o1 with the input neurons i1, i2, i3 and i4 is 1011. Similarly, o2 is connected with i2 and i3, but not with i1 and i4, so the connection state of the output neuron o2 with the input neurons i1, i2, i3, i4 is 0110. With the connection states of the output neurons o1, o2 with all the input neurons sequentially arranged, the connecting relationship data of the artificial neural network stored in the form of a first direct index is 10110110.

The connecting relationship data can also be stored in the form of a second direct index.

For example, in the artificial neural network shown in Fig. 5, i1 is connected with o1 but not with o2; i2 is not connected with o1 but is connected with o2; i3 is connected with o1 and o2; and i4 is connected with o1 but not with o2; so the connection state of the input neuron i1 with the output neurons o1, o2, o3 and o4 is 10. Similarly, the connection state of the input neuron i2 with the output neurons o1, o2, o3 and o4 is 01; the connection state of the input neuron i3 with the output neurons o1, o2, o3 and o4 is 11; and the connection state of the input neuron i4 with the output neurons o1, o2, o3 and o4 is 10. With the connection states of the input neurons i1, i2, i3 and i4 with both the output neurons sequentially arranged, the connecting relationship data of the artificial neural network stored in the form of the second direct index is 10011110.

The connecting relationship data can also be stored in the form of step index.

For example, in the artificial neural network shown in Fig. 4, the output neuron o1 is connected with the input neurons i1, i3 and i4, then the first character of the connection state of the output neuron o1 is 0; that is, the distance between the first input neuron connected with o1, which is i1, and the first input neuron of the artificial neural network, which is also i1, is 0; and the distance between the second input neuron connected with o1, which is i3, and the first input neuron connected with o1, which is i1, is 2; and the distance between the third input neuron connected to o1, which is i4, and the second input neuron connected with o1, which is i3, is 1. Therefore, the connection state of the output neuron o1 is 021. The output neuron o2 is connected with the input neurons i2 and i3; similarly, the connection state of the output neuron o2 is 11. With the connection states of the output neurons o1 and o2 with all the input neurons sequentially arranged, the connecting relationship data of the artificial neural network stored in the form of step index is 02111.

After obtaining the connecting relationship data of the artificial neural network, the processed input neurons and weights can be obtained accordingly. The mapping unit 1 stores the dataset consisting of the processed weights and the processed input neurons in the storage unit 2 based on the connecting relationship data. The processed weights refer to the connected weights, or to the weights with values or absolute values greater than the first threshold. For example, with the connecting relationship data of the artificial neural network stored in the form of the first direct index being 10110110, and the input neurons corresponding to the processed weights $w_{11}$, $w_{31}$, $w_{41}$, $w_{22}$, and $w_{32}$ being i1, i3, i4, i2, and i3, respectively, the input neurons and the processed weights constitute a dataset: i1, wn, i3, $w_{31}$, i4, $w_{41}$, i2, $w_{22}$, i3, $w_{32}$, which is stored in the storage unit 2.

With the connecting relationship data of the artificial neural network stored in the form of the second direct index being 10011110, the input neurons and the processed weights constitute a dataset: i1, $w_{11}$, i2, $w_{22}$, i3, $w_{31}$, i3, $w_{32}$, i4, $w_{41}$, which is stored in the storage unit 2. With the connecting relationship data of the artificial neural network stored in the form of step index being 02111, the input neurons and the processed weights constitute a dataset: i1, $w_{11}$, i3, $w_{31}$, i4, $w_{41}$, i2, $w_{22}$, i3, $w_{32}$, which is stored in the storage unit 2.

In other embodiments, also as shown in Fig. 3, the mapping unit 1 reads the input neurons, the weights and the connecting relationship data in the storage unit 2 and has them processed; the mapping unit 1 also stores the dataset format consisting of the processed weights and the input neurons in the first input buffer 6 and the second input buffer 8, respectively.

The control unit 5 controls the instruction buffer 4 to read the instructions in the storage unit 2, and controls the operation unit 7 to operate based on the instructions. The operation unit 7 stores, under the control by the control unit 5, the input neurons and the weights in the dataset stored in the storage unit 2 into the first input buffer 6 and the second input buffer 8 respectively. The operation unit 7 reads the input neurons and the weights from the first input buffer 6 and the second input buffer 8 respectively, and performs a forward operation for the artificial neural network, to obtain the output neurons and have them stored in the output buffer 9, and the output neurons in the output buffer 9 are stored into the storage unit 2 via the DMA3.

The operation unit 7 multiplies each input neuron by the corresponding weight to obtain a weighted output neuron, and adds the weighted output neurons stepwise through an adder tree to obtain summed output neurons, or adds the weighted output neurons via a sum bias to obtain adding-biased output neurons, and performs an activating functional operation on the summed output neurons or the adding-biased output neurons, to obtain the output neurons of the artificial neural network, thus completing the forward operation of the artificial neural network. The activating function can be a sigmoid function, a tanh function, or a ReLU function.

In this embodiment, the operation unit 7, the instruction buffer 4, the first input buffer 6, the second input buffer 8, the output buffer 9, and the control unit 5 are implemented by a dedicated processor, and the first input buffer 6, the second input buffer 8, and the output buffer 9 are all on-chip buffer.

When an artificial neural network computing device is used for weight update, the mapping unit 1, based on the processed weights, stores the gradients of their corresponding connected output neurons and their corresponding input neurons in the storage unit 2.

The operation unit 7 stores the output neuron gradients and the input neurons stored in the storage unit 2 into the first input buffer 6 and the second input buffer 8 respectively, under the control of the control unit 5. The operation unit 7 reads the output neuron gradients and the input neurons from the first input buffer 6 and the second input buffer 8 respectively, multiplies each output neuron gradient by the corresponding input neuron, and multiplies the multiplication result by a learning rate to obtain an update amount for the processed weight. The updated processed weight can be obtained by subtracting the corresponding update amount from the processed weight and is stored in the output buffer 9; the updated processed weights in the output buffer 9 are stored in the storage unit 2 via the DMA 3.

For example, with the connecting relationship data of the artificial neural network stored in the form of the first direct index being 10110110, the processed weights being $w_{11}$, $w_{31}$, $w_{41}$, $w_{22}$, and $w_{32}$, and the corresponding input neurons being respectively i1, i3, i4, i2, and i3, the output neuron gradients corresponding to the processed weights and the input neurons constitute a dataset: To1, i1; To1, i3; To1, i4; To2, i2; To2, i3, which is stored in the storage unit 2, with To1 and To2 representing the gradients of the output neurons o1 and o2, respectively. To1 and i1, To1 and i3, To1 and i4, To2 and i2, To2 and i3 are multiplied respectively, and the multiplications results are multiplied by the learning rate to obtain the update amounts $\Delta w_{11}$, $\Delta w_{31}$, $\Delta w_{41}$, $\Delta w_{22}$, $\Delta w_{32}$ for the processed weights. The update amounts are subtracted respectively from the processed weights $w_{11}$, $w_{31}$, $w_{41}$, $w_{22}$, and $w_{32}$, obtaining the updated processed weights $w_{11}'$, $w_{31}'$, $w_{41}'$, $w_{22}'$, and $w_{32}'$.

Similarly, with the connecting relationship data of the artificial neural network stored in the form of the second direct index being 10011110, the processed weights being $w_{11}$, $w_{22}$, $w_{31}$, $w_{32}$, $w_{41}$, and the corresponding input neurons being respectively i1, i2, i3, i3, i4, the output neuron gradients and the input neurons constitute a dataset: To1, i1; To2, i2; To1, i3; To2, i3; To1, i4, which is stored in the storage unit 2. To1 and i1, To2 and i2, To1 and i3, To2 and i3, To1 and i4 are multiplied respectively, and the multiplication result are multiplied by the learning rate to obtain the update amounts $\Delta w_{11}$, $\Delta w_{22}$, $\Delta w_{31}$, $\Delta w_{32}$, $\Delta w_{41}$ for the processed weights. The update amounts are subtracted respectively from the processed weights $w_{11}$, $w_{22}$, $w_{31}$, $w_{32}$, $w_{41}$, obtaining

the updated processed weights $w_{11}'$, $w_{22}'$, $w_{31}'$, $w_{32}'$, $w_{41}'$.

With the connecting relationship data of the artificial neural network stored in the form of step index being 02111, the processed weights being wn, $w_{31}$, $w_{41}$, $w_{22}$, $w_{32}$, and the corresponding input neurons being respectively i1, i3, i4, i2, i3, the output neuron gradients and the input neurons constitute a dataset: To1, i1; To1, i3; To1, i4; To2, i2; To2, i3, which is stored in the storage unit 2. To1 and i1, To1 and i3, To1 and i4, To2 and i2, To2 and i3 are multiplied respectively, and the multiplication results are multiplied by the learning rate to obtain the update amounts $\Delta w_{11}$, $\Delta w_{31}$, $\Delta w_{41}$, $\Delta w_{22}$, $\Delta w_{32}$ for the processed weights. The update amounts are subtracted respectively from the processed weights wn, $w_{31}$, $w_{41}$, $w_{22}$, and $w_{32}$, obtaining the updated processed weights $w_{11}'$, $w_{31}'$, $w_{41}'$, $w_{22}'$, and $w_{32}'$.

When the artificial neural network computing device is used for an inverse operation, the mapping unit 1 stores the output neuron gradients and the processed weights in the storage unit 2.

The mapping unit 1 selects the output neurons corresponding to the processed weights, and stores the output neuron gradients and the processed weights in the storage unit 2, wherein the processed weights refer to the weights having connections before the update, or the weights with values or absolute values greater than the first threshold.

For example, with the connecting relationship data of the artificial neural network stored in the form of the first direct index being 10110110, the output neuron gradients and the processed weights constitute a dataset: To1, wn, To1, $w_{31}$, To1, $w_{41}$, To2, $w_{22}$, To2, $w_{32}$, which is stored in the storage unit 2. With the connecting relationship data of the artificial neural network stored in the form of the second direct index being 10011110, the output neuron gradients and the processed weights constitute a dataset: To1, $w_{11}$; To2, $w_{22}$; To1, $w_{31}$; To2, $w_{32}$; To1, $w_{41}$, which is stored in the storage unit 2. With the connecting relationship data of the artificial neural network stored in the form of step index being 02111, the output neuron gradients and the processed weights constitute a dataset: To1, $w_{11}$, To1, $w_{31}$, To1, $w_{41}$, To2, $w_{22}$, To2, $w_{32}$, which is stored in the storage unit 2.

The operation unit 7 reads the output neuron gradients and the processed weights from the storage unit 2, and stores them in the first input buffer 6 and the second input buffer 8 respectively. The operation unit 7 reads the output neuron gradients and the processed weights from the first input buffer 6 and the second input buffer 8 respectively, multiplies each output neuron gradient by the corresponding processed weight, adds the multiplication results stepwise through an adder tree, and performs an activating function inverse operation on the addition result to obtain the input neuron gradients which then are stored in the output buffer 9. The input neuron gradients in the output buffer 9 are stored in the storage unit 2 via the DMA 3 to complete the inverse operation of the artificial neural network.

The artificial neural network computing device of the present disclosure stores the processed weights and the input neurons, the output neurons and the input neurons, as well as the output neurons and the processed weights. When performing the forward and the inverse operations, operations can be performed on the pairs directly, without searching the corresponding input neurons, output neurons and weights through an index array, reducing the number of memory access, simplifying the operation, and improving the operation speed and performance. In addition, by adopting the dedicated instruction and operation unit 7 for the multi-layer artificial neural network operation, the problems of insufficient operation performance of CPU and GPU and high expenditure on front-end decoding can be solved, effectively improving the support for the multi-layer artificial neural network algorithm. By using dedicated on-chip buffers for the multi-layer artificial neural network operation, the reusability of the input neuron and weight data has been fully exploited, avoiding repeated reading and writing of these data from/to the memory and reducing the bandwidth for memory access, preventing the problem of the memory bandwidth being a bottleneck in the performance of the multi-layer artificial neural network operation and its training algorithm.

Further, the operation unit 7 includes, but not limited to, three parts, which are a multiplier, one or more adders (optionally, an adder tree constituted of a plurality of adders) and an activating function unit. The multiplier multiplies first input data (in1) by second input data (in2) to obtain first output data (out1), with the process of out1=in1*in2. Third input data (in3) is added stepwise through the adder tree to obtain second output data (out2), wherein in3 is a vector with a length of N, N is greater than 1, with the process of out2=in3[1]+in3[2]+...+ in3[N]; and/or the result of adding the third input data (in3) through the adder tree is added with fourth input data (in4) to obtain the second output data (out2), with the process of out2=in3[1]+in3[2]+...+in3[N]+in4; or the third input data (in3) and the fourth input data (in4) are added together to obtain the second output data (out2), with the process of out2=in3+in4. The activating function unit has fifth input data (in5) subjected to an activating function (active) to obtain third output data (out3), with the process of out3=active(in5). The activating function (active) can be functions such as sigmoid, tanh, relu, softmax, etc. In addition to the activating operation, the activating function unit can implement other nonlinear functional operations, and can subject the input data (in) to the functional operations (f) to obtain the output data (out), with the process of out=f(in).

For an artificial neural network computing device according to another embodiment of the present disclosure, features identical with those in the foregoing embodiments will not be described again.

In the inverse operation, the mapping unit 1 stores the output neuron gradients and all the input neurons in the storage unit 2.

For example, when the connecting relationship data is stored in the form of the first direct index and in the form of step index, the output neuron gradients and the input neurons constitute a dataset: To1, i1; To1, i2; To1, i3; To1, i4; To2 , i1; To2, i2; To2, i3; To2, i4, which is stored in the storage unit 2. When the connecting relationship data is stored in the form of the second direct index, the output neuron gradients and the input neurons constitute a dataset: To1,i1; To2, i1; To1, i2; To2, i2; To1, i3; To2, i3; To1, i4; To2, i4.

The operation unit 7 reads the output neuron gradients and the input neurons from the storage unit 2, and stores them in the first input buffer 6 and the second input buffer 8 respectively. The operation unit 7 reads the output neuron gradients and the input neurons from the first input buffer 6 and the second input buffer 8 respectively, multiplies each output neuron gradient by the corresponding input neuron, and multiplies the multiplication result by the learning rate, to obtain the update amounts for all the weights; and subtracts the corresponding update amounts from all the weights to get all the updated weights.

The operation unit 7 determines whether the updated weight is still a connected weight. If the updated weight is still a connected weight, the weight is set to be a connected weight, otherwise the weight is set to be a unconnected weight, which means there is no connection between the input neuron and the output neuron corresponding to the weight. The updated processed weights are obtained.

Alternatively, the operation unit 7 compares the updated weight with the first threshold. If the updated weight or the absolute value thereof is greater than the first threshold, the weight is retained; that is, there is a connection between the input neuron and the output neuron corresponding to the weight. Otherwise, the weight is deleted; that is, there is no connection between the input neuron and the output neuron corresponding to the weight. The updated processed weights are obtained.

The mapping unit 1 further selects, based on the updated processed weights, their corresponding output neurons, and stores the processed weights and the output neuron gradients in the storage unit 2, wherein the processed weights refer to the pre-update-values of the processed weights.

The operation unit 7 reads the output neuron gradients and the processed weights from the storage unit 2, and stores them in the first input buffer 6 and the second input buffer 8 respectively. The operation unit 7 reads the output neuron gradients and the processed weights from the first input buffer 6 and the second input buffer 8 respectively, and performs an inverse operation of the artificial neural network to obtain the input neuron gradients.

It can be seen that the present disclosure can also update the connecting relationship data of the artificial neural network, improving the precision of the artificial neural network operation.

For an artificial neural network computing device according to still another embodiment of the present disclosure, features identical with those in the foregoing embodiments will not be described again. As shown in Fig. 6, in this embodiment, the mapping unit 1 is also located in the dedicated processor chip.

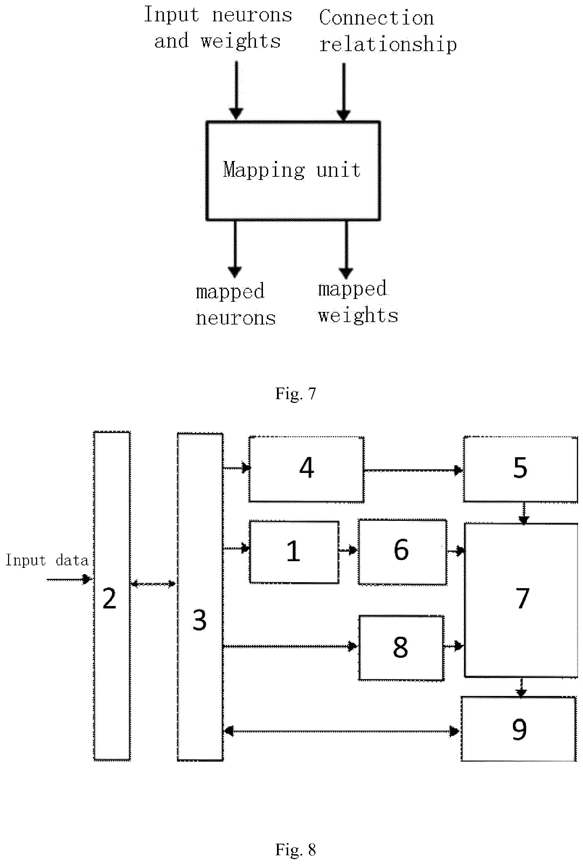

When the artificial neural network computing device is used for a forward operation, the mapping unit 1 reads the input neurons and the weights stored in the storage unit 2 and has them processed, to obtain the input neuron-weight pairs. All the input neuron-weight pairs constitute a dataset, with the input neurons and the weights sorted in the first input buffer 6 and the second input buffer 8 respectively. In other embodiments, as shown in Fig. 7, the mapping unit 1 reads the input neurons, the weights, and the connecting relationship data in the storage unit 2 and processes them to obtain the input neuron-weight pairs. All the input neuron-weight pairs constitute a dataset, with the input neurons and the weights stored in the first input buffer 6 and the second input buffer 8 respectively.

When the artificial neural network computing device is used for weight update, the mapping unit 1 stores, based on the processed weights, the gradients of their corresponding connected output neurons and their corresponding input neurons into the first input buffer 6 and the second input buffer 8 respectively.

When the artificial neural network computing device is used for an inverse operation, the mapping unit 1 stores the output neuron gradients and the processed weights to the first input buffer 6 and the second input buffer 8 respectively.

For an artificial neural network computing device according to still another embodiment of the present disclosure, features identical with those in the foregoing embodiments will not be described again. As shown in Fig. 8, in this embodiment, the mapping unit 1 is also located in the dedicated processor chip and connected to the first input buffer 6, but not connected to the second input buffer 8.

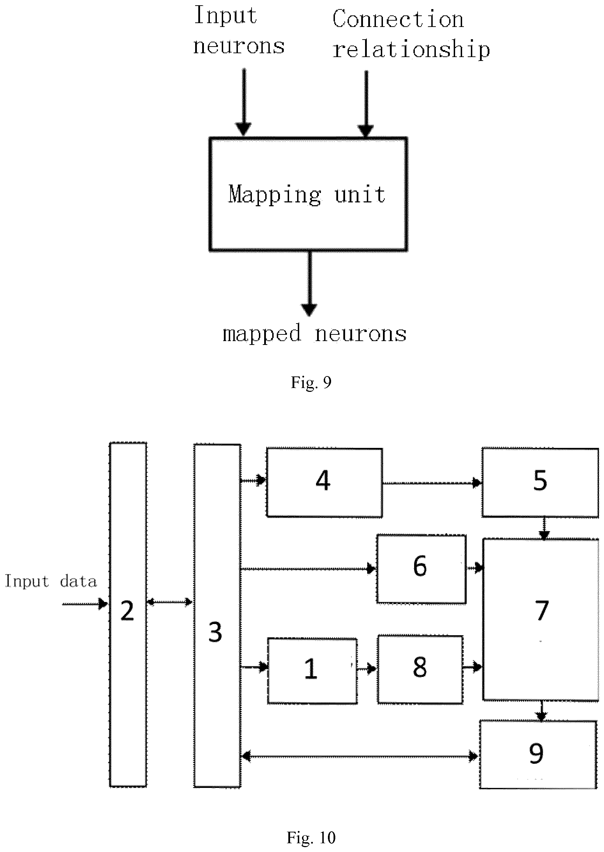

When the artificial neural network computing device is used for a forward operation, the mapping unit 1 reads the input neurons and the connecting relationship data thereof in the storage unit 2 and has them processed, and stores the processed input neurons to the first input buffer 6. The storage unit 2 stores the processed weights in the second input buffer 8, as shown in Fig. 9.

When the artificial neural network computing device is used for the weight update, the mapping unit 1 stores, based on the processed weights, the gradients of their corresponding output neurons into the first input buffer 6. The storage unit 2 stores the input neurons connected to the output neuron gradients into the second input buffer 8 directly.

When the artificial neural network computing device is used for an inverse operation, the mapping unit 1 stores the output neuron gradients into the first input buffer 6, and the storage unit 2 stores the processed weights into the second input buffer 8 directly.

For an artificial neural network computing device according to still another embodiment of the present disclosure, features identical with those in the foregoing embodiments will not be described again. As shown in Fig. 10, in this embodiment, the mapping unit 1 is also located in the dedicated processor chip and connected to the second input buffer 8, but not connected to the first input buffer 6.

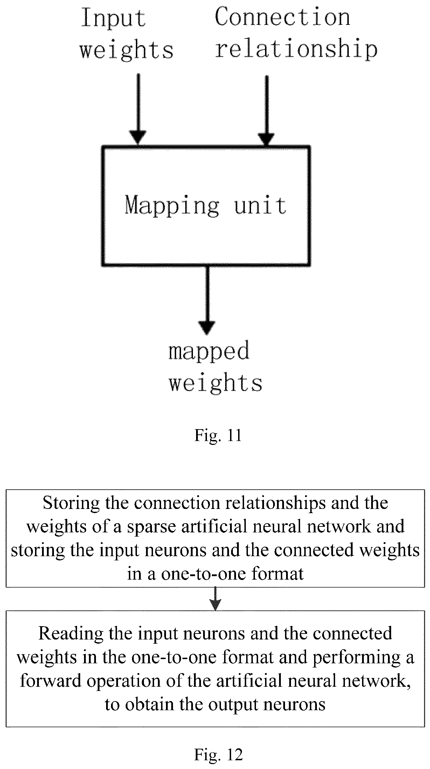

When the artificial neural network computing device is used for a forward operation, the mapping unit 1 reads the weights and the connecting relationship data thereof stored in the storage unit 2 and has them processed, and stores the processed weights into the second input buffer 8; the storage unit 2 stores the processed input neurons into the first input buffer 6. The mapping unit 1 reads the weights and the connecting relationship data thereof stored in the storage unit 2, has them processed, and stores the processed weights to the second input buffer 8. The storage unit 2 stores the processed input neurons in the first input buffer 6, as shown in Fig 11.

When the artificial neural network computing device is used for weight update, the mapping unit 1 stores, based on the processed weights, their corresponding input neurons to the first input buffer 6; the storage unit 2 directly stores the gradients of the output neurons connected to the input neurons to the second input buffer 8.

When the artificial neural networks computing device is used for an inverse operation, the mapping unit 1 stores the processed weights to the first input buffer 6; the storage unit 2 directly stores the output neuron gradients to the second input buffer 8.

It should be noted that, the artificial neural network computing device as described above can implement not only sparse neural network operations but also dense neural network operations. The artificial neural network computing device is particularly suitable for sparse neural network operations, because there is a large number of zero-value data or data with very small absolute value in the sparse neural network. These data can be extracted by the mapping unit, to improve the operational efficiency while ensuring the precision of the operation.

The sparse neural network can be defined as: if in a neural network the number of weights with a zero value is large while the distribution of the weights with non-zero values is irregular, such a neural network can be referred as a sparse neural networks. The ratio of the number of zero-value weight elements to the number of all the weight elements in the neural network is defined as the sparseness of the neural network.

In still another embodiment of the present disclosure, there is further provided an operation method which performs artificial neural network operations by using the artificial neural network computing device; as shown in Fig. 12, the operation method includes a forward operation of the artificial neural network comprising:

processing the input neurons and the weights by the mapping unit 1 to obtain the connecting relationship data of the artificial neural network;
obtaining the input neuron-weight pairs by the mapping unit 1 based on the connecting relationship data, wherein all the input neuron-weight pairs constituting a dataset which is stored in the storage unit 2; the processed weights refer to the connected weights or the weights with values or absolute values greater than the first threshold.

The operation unit 7 reads the input neurons and the processed weights and performing a forward operation of the artificial neural network, to obtain the output neurons.

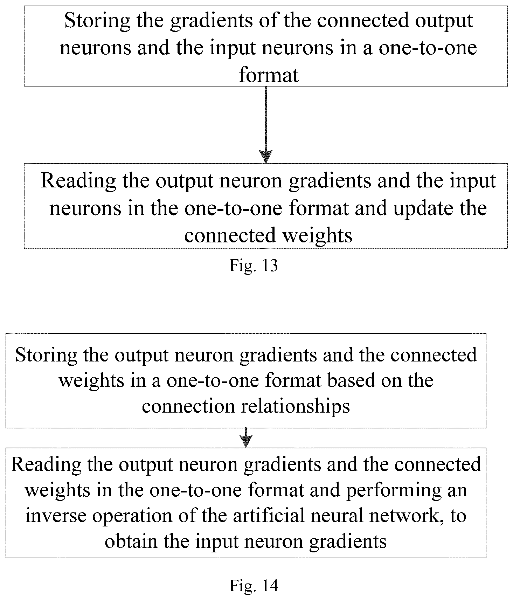

As shown in Fig. 13, the operation method includes the weight update of the artificial neural network comprising:
storing, by the mapping unit 1 based on the processed weights, the gradients of their corresponding connected output neurons and their corresponding input neurons to the storage unit 2.

The operation unit 7 reads the output neuron gradients and the input neurons and updating the processed weights by the operation unit 7.

Specifically, the output neuron gradients and the input neurons are stored into the storage unit; and the output neuron gradients and the input neurons stored in the storage unit are respectively stored in the first input buffer and the second input buffer.

The output neuron gradients and the input neurons are read from the first input buffer and the second input buffer; each of the output neuron gradients is multiplied by its corresponding input neuron, and the multiplication result is multiplied by the learning rate to obtain the update amount for the processed weights; and the corresponding update amount is subtracted from the processed weight to obtain the updated processed weight.

As shown in Fig.14, the operation method includes an inverse operation of the artificial neural network comprising:
storing, by the mapping unit 1, the output neuron gradients and the processed weights to the storage unit 2.

Specifically, the output neurons corresponding to the processed weights are selected, and the output neuron gradients and the processed weights are stored in the storage unit 2; the output neuron gradients and the processed weights are read from the storage unit 2 and stored into the first input buffer 6 and the second input buffer 8 respectively.

The operation unit 7 reads the output neuron gradients and the processed weights, and performs an inverse operation of the artificial neural networks to obtain the input neuron gradients.

Specifically, the operation unit 7 reads the output neuron gradients and the processed weights from the first input buffer 6 and the second input buffer 8; each of the output neuron gradients is multiplied by its corresponding connected weight, and the multiplication results are added stepwise through the adder tree; and the sum is subjected to an activating function inverse operation to obtain the input neuron gradients. The activating function includes: a sigmoid function, a tanh function, or a ReLU function.

Wherein, only the processed weights may be stored, or all the weights may be stored. When all the weights are stored, the mapping unit 1 stores the output neuron gradients and the input neurons into the storage unit 2.

The operation unit 7 reads the output neuron gradients and the input neurons, and updates the processed weights.

The update amounts for the weights include the update amounts of all the weights. By subtracting the corresponding update amounts from all the weights, all the updated weights are obtained. A determination is made with regard to all the updated weights. If an updated weight is a connected weight, the weight is set to be a connected weight; otherwise, the weight is set to be a unconnected weight. Alternatively, all the updated weights are compared with a threshold; if the value or the absolute value of an updated weight is greater than the first threshold, the weight is retained; otherwise, the weight is deleted.

The mapping unit 1 further selects, based on the updated processed weights, their corresponding output neurons and stores the processed weights and the output neuron gradients into the storage unit 2, wherein the processed weights refer to the pre-update-values of the processed weights.

The operation unit 7 reads the output neuron gradients and the processed weights, and performs an inverse operation of the artificial neural network to obtain the input neuron gradients.

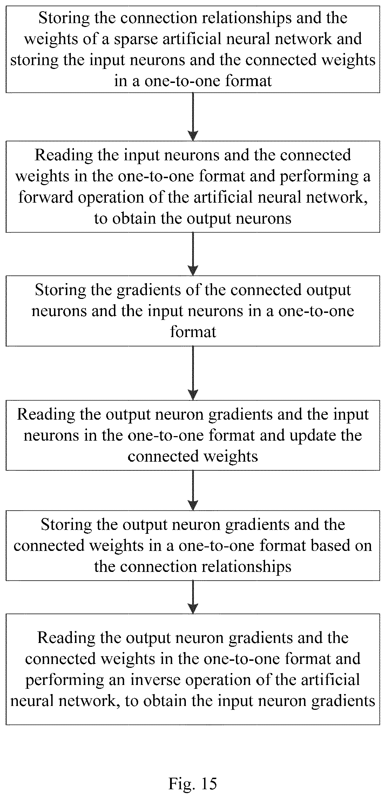

The operation method may include a forward operation, a weight update, and an inverse operation of the artificial neural network, as shown in Fig. 15.

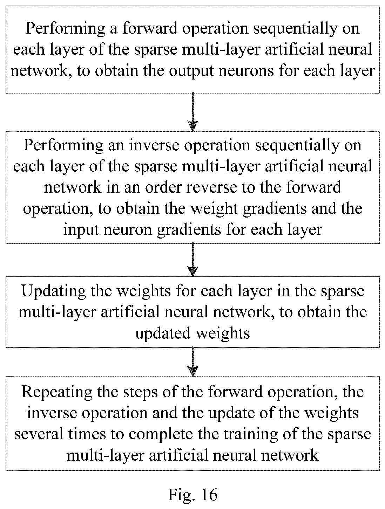

In another embodiment of the present disclosure there is further provided an operation method, in particular, a method of performing artificial neural network training by using the above artificial neural network computing device. Referring to Fig. 16, the operation method comprises:

a forward operation step: first, a forward operation is sequentially performed on each layer in the multi-layer artificial neural network to obtain the output neurons of each layer.

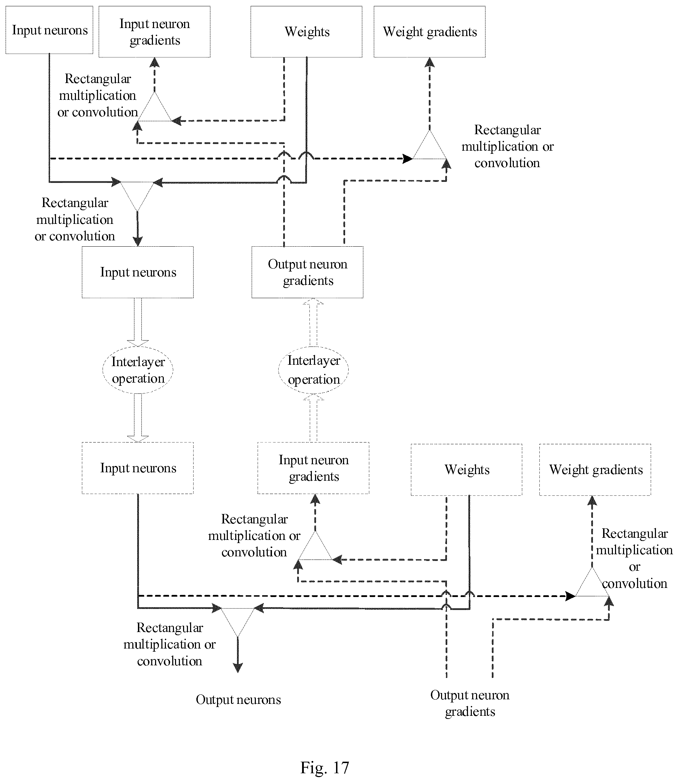

For each layer in the artificial neural network, the forward operation of the layer can be performed in accordance with the forward operation step of the previous embodiment. Referring to Fig. 17, in this step, after the forward operation of one layer of the artificial neural network has been completed, under the control of the operation instructions, the operation unit will use the output data of this layer of the artificial neural network as the input data for a succeeding layer of the artificial neural network; in other words, the output neurons of the layer of the artificial neural network is used as the input neurons of the succeeding layer of the artificial neural network; or an interlayer operation can be performed on the output neurons of the preceding layer of the artificial neural network, and the operation results can be taken as the input neurons of the succeeding layer. After obtaining the input neurons, a forward operation is performed on the succeeding layer of the artificial neural network, and at the same time the weights are replaced by the weights for the succeeding layer of the artificial neural network. The interlayer operation may be a vector operation or a nonlinear operation.

An inverse operation step: Then, in opposite direction to the forward operation, an inverse operation is performed sequentially on each layer of the multi-layer artificial neural network to obtain weight gradients and input neuron gradients for each layer.

This step includes a first operation part and a second operation part. The first operation part is used to calculate the weight gradients. For each layer of the artificial neural network, the weight gradients of the layer are obtained by matrix multiplication or convolution on the output neuron gradients and the input neurons of the layer.

The second operation part is used to calculate the input neuron gradient. For each layer of the artificial neural network, the inverse operation for the layer can be performed in accordance with the inverse operation step of the previous embodiment. Referring to Fig. 17, in this step, after the inverse operation of one preceding layer of the artificial neural network has been completed, under the control of the operation instructions, the operation unit will use the output data of this preceding layer of the artificial neural network as the input data for a succeeding layer of the artificial neural network. But in the inverse operation, the output data of the preceding layer of the artificial neural networks is the input neuron gradient, and the input data for the succeeding layer of the artificial neural network is the output neuron gradient; that is, the input neuron gradients of the preceding layer of the artificial neural network is used as the output neuron gradients of the succeeding layer of the artificial neural network, or an interlayer operation can be performed on the input neuron gradients of the preceding layer of the artificial neural network, and the operation results are used as the output neuron gradients of the succeeding layer of the artificial neural network. After the output neuron gradients has been obtained, an inverse operation is performed on the succeeding layer of the artificial neural network, and at the same time the weights are replaced by the weights of the succeeding layer of the artificial neural network.

It should be noted that, in the inverse operation, "the preceding layer" and "the succeeding layer" are opposite to those in the forward operation. For two adjacent layers in the artificial neural network, a first layer and a second layer, in the forward operation, the first layer refers to "the preceding layer" and the second layer refers to "the succeeding layer", whereas in the inverse operation, the first layer refers to "the succeeding layer" and the second layer refers to "the preceding layer".

A weight update step: the weight update then can be performed on each layer in the multi-layer artificial neural network to obtain the updated weights.

After the inverse operation has been performed, the weight gradients for each layer are calculated. In this step, for each layer of the artificial neural network, the weights and the weight gradients of the layer are stored respectively with the first input buffer and the second input buffer; then the weights are updated in the operation unit with the weight gradients to get the updated weights.

The forward operation step, the inverse operation step, and the weight update step are repeated multiple times to complete the training of the multi-layer artificial neural network.

The entire training method needs repeated executions of the above processes until the parameters of the artificial neural network meet the requirements, and the training process is completed.

For example, suppose that the neural network comprise three layers: an input layer, an intermediate layer, and an output layer, wherein: each neuron in the input layer is responsible for receiving input data from outside and transmitting the data to the neurons in the intermediate layer; the intermediate layer is responsible for information transformation, it can be designed as a single-hidden-layer structure or a multi-hidden-layer structure according to the requirements on information transforming capability, and after the information transferred by the last hidden layer to each neuron in the output layer has been further processed, one forward propagation processing for learning is completed; and the output layer outputs the information processing results to the outside. In a counter-propagation phase of the error, the weights for each layer are corrected by errors through the output in an error gradient descending manner, and the error is back-transferred to the intermediate layer and the input layer one by one.

The input neurons and the output neurons mentioned in the present disclosure do not refer to the neurons in the input layer and the output layer of the entire neural network, but to any two adjacent layers in the network; the neurons in a lower layer in a network forward operation are the input neurons and the neurons in an upper layer in the network forward operation are the output neurons. Taking convolutional neural network as an example, suppose that the convolutional neural network has L layers, for the K layer and the K+1 layer (K=1, 2, ..., L-1), the K layer is called the input layer, in which the neurons are the input neurons, and the K+1 layer is called the output layer, in which the neurons are the output neurons. That is, except for the top layer, each layer can be used as an input layer, and its succeeding layer is the corresponding output layer.

The operations mentioned above are all operations for one layer in the neural network. For a multi-layer neural network, the implementation is that: in the forward operation, when the operation on a preceding layer of the artificial neural network has been completed, the operation instruction for the succeeding layer will take the output neurons calculated by the operation unit as the input neurons of the succeeding layer to perform the operation (or the output neurons may be subjected to certain operations before being used as the input neurons of the succeeding layer), meanwhile, the weights are replaced by the weights of the succeeding layer; in the inverse operation, when the inverse operation for a preceding layer of the artificial neural network has been completed, the operation instruction for the succeeding layer will take the input neuron gradients calculated in the operation unit as the output neuron gradients of the succeeding layer to perform the operation (or the input neuron gradients may be subjected to certain operations before being used as the output neuron gradients of the succeeding layer), meanwhile the weights are replaced by the weights of the succeeding layer. As shown in Fig. 17, the dotted arrows indicate the inverse operations, and the solid arrows indicate the forward operations.

It should be noted that during the training process, the "preceding layer" and the "succeeding layer" in the inverse operation are exactly opposite to those in the forward operation; that is, with regard to two adjacent layers of the artificial neural network: the first layer and the second layer, in the forward operation, the first layer is the "preceding layer" and the second layer is the "succeeding layer", but in the inverse operation, the first layer is the "succeeding layer" and the second layer is the "preceding layer".

It should be noted that implementations not shown or described in the drawings or the specification are all known modes to those skilled in the art, and are not described in detail. In addition, the above definitions of the elements are not limited to the specific structures and shapes mentioned in the embodiments, and those skilled in the art may make simple modifications or replacements of them. Examples including parameters of specific values may be provided herein. However, these parameters need not to be exactly equal to the corresponding values, but may approximate the corresponding values within acceptable error tolerances or design constraints. The directional terms mentioned in the embodiments, such as "upper", "lower", "front", "behind", "left", "right", etc., are merely referring to the directions in the drawings, but not intended to limit the scope of protection of the present disclosure. The above embodiments may be used in combination with each other or in combination with other embodiments based on design and reliability considerations; that is, the technical features in different embodiments can be freely combined to form more embodiments.

Each functional unit/module may be a piece of hardware, such as a circuit including a digital circuit, an analog circuit, or the like. Physical implementations of hardware structures include but not limited to physical devices, which include but not limited to transistors, memristors, or the like. The computing modules in the computing device can be any suitable hardware processor, such as a CPU, GPU, FPGA, DSP, ASIC, or the like. The storage unit may be any suitable magnetic storage medium or magneto-optical storage medium such as RRAM, DRAM, SRAM, EDRAM, HBM, HMC, or the like.

The embodiments of the present disclosure further provide a computer storage medium, wherein the computer storage medium may store a program, which implements some or all of the steps in any of the neural network processing methods in the foregoing method embodiments when executed.

It should be noted that, for the sake of brevity, the foregoing method embodiments are all described as a combination of a series of actions, but those skilled in the art should understand that the present disclosure is not limited to the described sequence of the actions, because certain steps may be performed in other sequences or concurrently in accordance with the present disclosure. Furthermore, those skilled in the art should also understand that the embodiments described in the specification are preferred embodiments, and the actions and modules involved are not necessarily essential for the present disclosure.

The above embodiments are described with different focuses, and the parts that are not detailed in a certain embodiment can be found in the related descriptions of other embodiments.

In the several embodiments provided herein, it should be understood that the disclosed device may be implemented in other ways. For example, the device embodiments described above are merely illustrative. For example, the division of the units is only a logical functional division. In actual implementations, there may be other dividing manners, for example, combining or integrating multiple units or components into another system, or ignoring or not executing some features. In addition, the mutual coupling or direct coupling or communication connection shown or discussed may be indirect coupling or communication connection through some interfaces, devices or units, and may be in an electrical form or other forms.

The units described as separate components may or may not be physically separated, and the components presented as units may or may not be physical units; that is, they may be located in one place, or may be distributed to multiple network units. Some or all of the units may be selected according to actual needs to achieve the purpose of the technical solution of the embodiment.

In addition, the respective functional units in the respective embodiments of the present disclosure may be integrated into one processing unit, or each unit may exist in a physically independent manner, or two or more units may be integrated in one unit. The above integrated unit can be implemented in the form of hardware or in the form of a software functional unit.

The integrated unit, if implemented in the form of a functional software unit and sold or used as a standalone product, may be stored in a computer readable memory. Based on such understanding, the essence of the technical solution of the present disclosure or the part of the technical solution which makes a contribution to the prior art or the whole or part of the technical solution may be embodied in the form of a software product. The computer software product is stored in a memory which includes a number of instructions for causing a computer device (which may be a personal computer, server or network device, etc.) to perform all or some of the steps of the method described in each embodiment of the present disclosure. The foregoing memory includes various media that can store program codes, such as USB stick, Read-Only Memory (ROM), Random Access Memory (RAM), removable hard disk, magnetic disk, CD, and the likes.

Those skilled in the art may understand that all or some of the steps in the methods of the above embodiments can be completed with related hardware instructed by a program. The program can be stored in a computer readable memory. The memory may include: flash disk, Read-Only Memory (ROM), Random Access Memory (RAM), magnetic disk, CD, and the likes.

The embodiments of the present disclosure have been described in detail above, and the specific embodiments are used herein to explain the principle and the implementing modes of the present disclosure. The descriptions of the above embodiments are only for helping to understand the method of the present disclosure and its core concept. Meanwhile, in light of the concept of the present disclosure, those skilled in the art may make variations and modifications to the specific implementations, and the protection scope of the present disclosure should not be construed as being limited by the specification of the present disclosure.

## Claims

1. An operation method, wherein an artificial neural network computing device is used to train a multi-layer artificial neural network, and the artificial neural network computing device comprises: a mapping unit, a storage unit and an operation unit, the operation method comprises:

    performing a forward operation sequentially on each layer of the multi-layer artificial neural network, wherein for each layer of the multi-layer artificial neural network, the forward operation comprises:

processing input data by the mapping unit to obtain processed input data;

storing the processed input data by the storage unit; and

reading the processed input data and performing an artificial neural network operation by the operation unit to obtain output data of the artificial neural network;

performing an inverse operation sequentially on each layer of the multi-layer artificial neural network in an order reverse of the forward operation;

updating weights for each layer in the multi-layer artificial neural network; and

repeating the above steps several times to complete the training of the multi-layer artificial neural network.

2.  The operation method according to claim 1, wherein the artificial neural network computing device further comprises: a first input buffer and a second input buffer; and

updating the weights for each layer of the multi-layer artificial neural network comprises:

storing the weights and weight gradients for each layer of the artificial neural network respectively by the first input buffer and the second input buffer;

receiving the weight gradients from the second input buffer and updating the weights with the weight gradients by the operation unit to obtain updated weights.

3.  The operation method according to claim 1 or 2, wherein the input data comprises input neurons and the weights;

processing input data by the mapping unit to obtain processed input data comprises:

processing the weights by the mapping unit to obtain the processed weights and connecting relationship data of the weights; and

processing the input neurons by the mapping unit based on the connecting relationship data of the weights, to obtain processed input neurons.

4.  The operation method according to claim 1 or 2, wherein the input data comprises input neurons and the weights;

processing input data by the mapping unit to obtain processed input data comprises:

processing the input neurons by the mapping unit to obtain the processed input neurons and connecting relationship data of the input neurons; and

processing the weights by the mapping unit based on the connecting relationship data of the input neurons, to obtain processed weights.

5.  The operation method according to claim 3, wherein processing the weights by the mapping unit comprises:

deleting, by the mapping unit, the unconnected weights and retaining the connected weights as the processed weights.

6.  The operation method according to claim 3, wherein processing the weights by the mapping unit comprises:

deleting from the weights by the mapping unit the weights with values or absolute values less than or equal to a first threshold, to obtain the processed weights.

7.  The operation method according to claim 4, wherein processing the input neurons by the mapping unit comprises:

deleting from the input neurons by the mapping unit the input neurons with values or absolute values less than or equal to a second threshold, to obtain the processed input neurons.

8.  The operation method according to claim 1 or 2, wherein the input data comprises the processed weights, the input neurons, and the connecting relationship data of the input neurons;

processing the input data by the mapping unit to obtain the processed input data comprises:

processing the input neurons by the mapping unit according to the connecting relationship data of the input neurons to obtain the processed input neurons.

9.  The operation method according to claim 1 or 2, wherein the input data comprises the processed input neurons, the weights, and the connecting relationship data of the weights;

processing the input data by the mapping unit to obtain the processed input data comprises:

processing the weights by the mapping unit according to the connecting relationship data of the weight to obtain the processed weights.

10. The operation method according to claim 1 or 2, wherein processing the input data by the mapping unit to obtain the processed input data comprises:

processing at least one input neuron by the mapping unit to obtain connecting relationship data of the input neuron;

processing at least one weight by the mapping unit to obtain connecting relationship data of the weight; and

obtaining third connecting relationship data based on the connecting relationship data of the input neuron and the connecting relationship data of the weight, and processing the input neuron and the weight according to the third connecting relationship data by the mapping unit, to obtain the processed input neurons and the processed weights.

11. The operation method according to any one of claims 3 to 10, wherein the connecting relationship data of the input neuron and the connecting relationship data of the weight are expressed in the form of direct index or step index.

12. The operation method according to claim 11, wherein

when the connecting relationship data of the input neurons is expressed in the form of direct index, the connecting relationship data is a character string composed of 0 and 1, with 0 indicating that the value of the input neuron is zero and 1 indicating that the value of the input neuron is non-zero;

when the connecting relationship data of the input neurons is expressed in the form of step index, the connecting relationship data is a character string composed of distance values between input neurons of non-zero value and the previous input neurons of non-zero value.

13. The operation method according to claim 11, wherein

when the connection relation data of the weight is expressed in the form of direct index, the connecting relationship data is a character string composed of 0 and 1, with 0 indicating that the weight is a unconnected weight and 1 indicating that the weight is a connected weight;

when the connecting relationship data of the weight is expressed in the form of step index, the connecting relationship data is a character string composed of distance values between input neurons connected to an output neuron and the previous input neurons connected to the output neuron.

14. The operation method according to any one of claims 1 to 13, wherein for each layer of the multi-layer artificial neural network, the inverse operation comprises: a weight gradient calculation step and an input neuron gradient calculation step,

the weight gradient calculation step comprises:

obtaining by the operation unit the weight gradient for each layer of the artificial neural network from output neuron gradients and the input neurons of the layer;

the input neuron gradient calculation step comprises:

storing the output neuron gradients and the processed weights in the storage unit by the mapping unit; and

reading the output neuron gradients and the processed weights and performing an artificial neural network operation by the operation unit to obtain the input neuron gradients.

15. The operation method according to any one of claims 1 to 14, wherein the output data of a preceding layer of the artificial neural network is used as the input data of a succeeding layer; or, an interlayer operation is carried out on the output data of a preceding layer of the artificial neural network, and the operation result is taken as the input data of a succeeding layer; wherein, for any two adjacent layers, a first layer and a second layer, of the artificial neural network, in the forward operation, the preceding layer is the first layer, and the succeeding layer is the second layer; and in the inverse operation, the preceding layer is the second layer, and the succeeding layer is the first layer.

Fig. 1

Fig. 2

Input neurons
and weights

Connection
relationship

Mapping unit

mapped
neurons

mapped
weights

Fig. 3

Fig. 4

1 ( $i_1$ )

0 ( $i_2$ )    ( $o_1$ )

1 ( $i_3$ )    ( $o_2$ )

1 ( $i_4$ )

Fig. 5

Input data

2    3    1    6    7

4    5

8    9

Fig. 6

Input neurons  Connection
and weights  relationship

Mapping unit

mapped  mapped
neurons  weights

Fig. 7

Input data

2  3  4  5

1  6

8  7

9

Fig. 8

Input
neurons

Connection
relationship

Mapping unit

mapped neurons

Fig. 9

Input data

| 2 | 3 | | 4 | | 5 |
| | | | | | |

6

1 | 8 | 7

9

Fig. 10

EP 3 564 866 A1

Input weights    Connection relationship

Mapping unit

mapped weights

Fig. 11

| Storing the connection relationships and the weights of a sparse artificial neural network and storing the input neurons and the connected weights in a one-to-one format |
| --- |
| Reading the input neurons and the connected weights in the one-to-one format and performing a forward operation of the artificial neural network, to obtain the output neurons |

Fig. 12

Storing the gradients of the connected output
neurons and the input neurons in a one-to-one
format

Reading the output neuron gradients and the input
neurons in the one-to-one format and update the
connected weights

Fig. 13

Storing the output neuron gradients and the connected
weights in a one-to-one format based on the
connection relationships

Reading the output neuron gradients and the connected
weights in the one-to-one format and performing an
inverse operation of the artificial neural network, to
obtain the input neuron gradients

Fig. 14

Storing the connection relationships and the weights of a sparse artificial neural network and storing the input neurons and the connected weights in a one-to-one format

Reading the input neurons and the connected weights in the one-to-one format and performing a forward operation of the artificial neural network, to obtain the output neurons

Storing the gradients of the connected output neurons and the input neurons in a one-to-one format

Reading the output neuron gradients and the input neurons in the one-to-one format and update the connected weights

Storing the output neuron gradients and the connected weights in a one-to-one format based on the connection relationships

Reading the output neuron gradients and the connected weights in the one-to-one format and performing an inverse operation of the artificial neural network, to obtain the input neuron gradients

Fig. 15

Performing a forward operation sequentially on each layer of the sparse multi-layer artificial neural network, to obtain the output neurons for each layer

Performing an inverse operation sequentially on each layer of the sparse multi-layer artificial neural network in an order reverse to the forward operation, to obtain the weight gradients and the input neuron gradients for each layer

Updating the weights for each layer in the sparse multi-layer artificial neural network, to obtain the updated weights

Repeating the steps of the forward operation, the inverse operation and the update of the weights several times to complete the training of the sparse multi-layer artificial neural network

Fig. 16

Input neurons | Input neuron gradients | Weights | Weight gradients

Rectangular multiplication or convolution

Rectangular multiplication or convolution

Rectangular multiplication or convolution

Input neurons

Output neuron gradients

Interlayer operation

Interlayer operation

Input neurons

Input neuron gradients

Weights

Weight gradients

Rectangular multiplication or convolution

Rectangular multiplication or convolution

Rectangular multiplication or convolution

Output neurons

Output neuron gradients

Fig. 17

**EP 3 564 866 A1**

# INTERNATIONAL SEARCH REPORT

International application No.

PCT/CN2017/118264

### A. CLASSIFICATION OF SUBJECT MATTER

G06N 3/063 (2006.01) i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT; CNKI; WPI; EPODOC: 神经网络, 权重, 权值, 输入, 输出, 处理, 阈值, CNN, input, output, process

### C. DOCUMENTS CONSIDERED TO BE RELEVANT

| Category* | Citation of document, with indication, where appropriate, of the relevant passages | Relevant to claim No. |
|---|---|---|
| X | CN 104809426 A (NEC CORPORATION), 29 July 2015 (29.07.2015), description, paragraphs [0013]-[0023] | 1-15 |
| A | CN 104978601 A (TENCENT INC.), 14 October 2015 (14.10.2015), entire document | 1-15 |
| A | CN 104572504 A (INSPUR (BEIJING) ELECTRONIC INFORMATION INDUSTRY CO., LTD.), 29 April 2015 (29.04.2015), entire document | 1-15 |
| A | CN 103455843 A (HUAZHONG UNIVERSITY OF SCIENCE AND TECHNOLOGY), 18 December 2013 (18.12.2013), entire document | 1-15 |

☐ Further documents are listed in the continuation of Box C.     ☒ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 19 March 2018 | 28 March 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | CONG, Lei Telephone No. (86-10) 53961305 |

Form PCT/ISA/210 (second sheet) (July 2009)

## INTERNATIONAL SEARCH REPORT
Information on patent family members

International application No.

PCT/CN2017/118264

| Patent Documents referred in the Report | Publication Date | Patent Family | Publication Date |
|---|---|---|---|
| CN 104809426 A | 29 July 2015 | None | |
| CN 104978601 A | 14 October 2015 | None | |
| CN 104572504 A | 29 April 2015 | None | |
| CN 103455843 A | 18 December 2013 | None | |

Form PCT/ISA/210 (patent family annex) (July 2009)